# EUROPÄISCHE PATENTANMELDUNG

(11) **EP 3 047 963 A1**
(43) Veröffentlichungstag der Anmeldung: **27.07.2016**
(21) Anmeldenummer: 15151736.4
(22) Anmeldetag: 20.01.2015
(51) Int. Cl.: B29C 65/50, B29C 65/08, B29C 65/04, B29C 65/06, B29C 65/10, B29C 65/14, B29C 65/18, B60J 10/265, F16J 15/00, B29L 31/26

(54) **Verfahren zum Stossverkleben von Profilenden**

(71) Anmelder: nolax AG, 6203 Sempach Station (CH)
(72) Erfinder: Traber, Bruno, 3110 Münsingen (CH); Kleiner, Birgit, 6023 Rothenburg (CH)
(74) Vertreter: Hepp Wenger Ryffel AG

(57) **Zusammenfassung**

Die Erfindung betrifft ein Verfahren zum Stossverkleben von Profilenden (2, 2') umfassend die Schritte: Bereitstellen einer Vorrichtung zum Stossverkleben von Profilenden (2, 2'), Bereitstellen eines Profils (1), Bereitstellen von zwei mindestens zweischichtigen Filmen (3, 3') oder von einem einschichtigen Film (7) und einem mindestens zweischichtigen Film (3), wobei die mindestens zweischichtigen Filme (3, 3') eine erste Schicht (4, 4') mit einer erste offenen Zeit und eine zweite Schicht (5, 5') mit einer zweiten offene Zeit aufweisen, Inkontaktbringen von einer ersten Folie (3) mit dem ersten Profilende (2) unter derartigen Bedingungen, dass sich die erste Schicht (4) der ersten Folie (3) mit dem ersten Profilende (2) verbindet, Ablängen des Profils (1) falls ein Endlosprofil bereitgestellt wurde, Einbau des Profils (1) derart, dass das zweite folienfreie Profilende (2') zugänglich ist, Inkontaktbringen eines weiteren Films, der mindestens zweischichtig (3') oder einschichtig (7) ausgestaltet ist, mit dem zweiten Profilende (2') unter derartigen Bedingungen, dass sich die Schicht (4') des weiteren zweischichtigen Films (3') oder die einzige Schicht des einschichtigen Films (7) mit dem zweiten Profilende (2') verbindet, Inkontaktbringen der zwei Filme (3, 3') oder der zwei Filme (3, 7) unter derartigen Bedingungen, dass sich die zweiten Schichten (5, 5') der zwei Filme (3, 3') verbinden oder, dass sich die zweite Schicht (5) des zweischichtigen Films mit der einzigen Schicht des einschichtigen Films (7) verbindet.

## Beschreibung

Die Erfindung betrifft ein Verfahren zum Stossverkleben von Profilenden gemäss den Oberbegriffen der unabhängigen Ansprüche.

Verfahren zum Stossverkleben kommen beispielsweise im Automobilbau insbesondere bei der Verklebung von vorgefertigten Türprofildichtungen zum Einsatz. Dabei ist eine Entwicklung von vorgefertigten Profilringen hin zu Endlosprofilen, die erst beim Einbau abgelängt werden und der Stoss verklebt wird, festzustellen. Dabei erfolgt die Verklebung im Spalt, was maschinell aufwendig und damit nachteilig ist.

Das allgemein bekannte Grundprinzip umfasst die Schritte schneiden der Profilenden, Heizen von Profil und einem Haftfilm sowie Fügen der so aktivierten Profilenden.

DE 101 38 781 A1 beschreibt das Einbringen von Dichtungsprofilen in Fahrzeugtüren, wobei die Dichtungsprofile einem Endlosband entstammen. Nachteilig an diesem Verfahren ist jedoch, dass keine Verschweissung oder Verkleben der Profilenden erfolgt. Somit weist das eingebrachte Dichtungsprofil einen undichten Bereich an den Profilenden auf.

EP 1 915 270 B1 beschreibt ein Verfahren, wobei die Profilenden mit Greifern zurückgeschoben und die Folie und die Heizelemente in den Spalt eingeführt werden. Mit den Heizelementen werden die Profilenden erwärmt und die Heizelemente im Anschluss ausgefahren. Die Profilenden werden mit den Greifern zurückgeschoben und an die eingebrachte Folie angedrückt. Dieses Verfahren ist nachteilig, da Klebefolie und Heizelement in den Spalt eingeführt werden müssen. Damit sind in einem automatisierten Prozess bzw. einer Prozessstrasse lange Taktzeiten notwendig.

Nachteilig an den vorgängig beschriebenen Verfahren des Standes der Technik sind das Ausführen komplexer Fertigungsschritte wie das Einbringen einer Klebefolie in einen Arbeitsspalt, das Einführen eines Heizelements in den Arbeitsspalt. Dies verzögert den Fertigungsprozess und macht ihn entsprechend aufwendig.

Es ist daher die Aufgabe der Erfindung, die Nachteile des Standes der Technik zu überwinden.

Insbesondere ist es eine Aufgabe der Erfindung, ein Verfahren bereit zu stellen, welches ein einfaches Verkleben von Stossenden gewährleistet und somit kurzer Taktzeiten für einen automatisierten Fertigungsprozess ermöglicht.

Diese Aufgabe wird durch die in den unabhängigen Patentansprüchen definierten Merkmale gelöst.

Die Erfindung betrifft ein Verfahren zum Stossverkleben von Profilenden umfassend die Schritte:
a. Bereitstellen einer Vorrichtung zum Stossverkleben von Profilenden,
b. Bereitstellen eines Profils, insbesondere eines Endlosprofils,
c. Bereitstellen von zwei mindestens zweischichtigen Filmen oder von einem einschichtigen Film und einem mindestens zweischichtigen Film, wobei die mindestens zweischichtigen Filme eine erste Schicht mit einer erste offenen Zeit bevorzugt im Bereich von 0,01 bis 20 sek, besonders bevorzugt im Bereich von 0,1 bis 10 sek, und eine zweite Schicht mit einer zweiten offene Zeit aufweisen, welche insbesondere grösser der ersten offenen Zeit der ersten Schicht ist,
d. Inkontaktbringen von einer ersten Folie mit dem ersten Profilende unter derartigen Bedingungen, dass sich die erste Schicht der ersten Folie mit dem ersten Profilende verbindet,
e. Ablängen des Profils falls in b. ein Endlosprofil bereitgestellt wurde,
f.Einbau des Profils derart, dass das zweite folienfreie Profilende zugänglich ist,
g. Inkontaktbringen eines weiteren Films, der
   - mindestens zweischichtig, insbesondere identisch dem ersten Film, oder
   - einschichtig ausgestaltet ist,
      mit dem zweiten Profilende unter derartigen Bedingungen, dass sich die Schicht des weiteren zweischichtigen Films oder die einzige Schicht des einschichtigen Films mit dem zweiten Profilende verbindet,
h. Inkontaktbringen der zwei Filme unter derartigen Bedingungen,
   - dass sich die zweiten Schichten der zwei Filme verbinden oder,
   - dass sich die zweite Schicht des zweischichtigen Films mit der einzigen Schicht des einschichtigen Films verbindet. Auf diese

Weise werden die Profilenden mit einem mindestens zweischichtigen Film beschichtet, welche zur Verklebung der Profilenden dienen. Eine Aktivierung im Spalt ist somit hinfällig. Dadurch sind im Fertigungsprozess hohe Taktraten möglich.

Hier und im Folgenden wird unter einer offenen Zeit die Zeit verstanden, die eine aktivierte Schicht in einem aktivierten Zustand verbleibt. Die offene Zeit ist also die aktive Zeitspanne zwischen einem Aktivieren des Klebstoffes bis zum spätesten möglichen Zeitpunkt des Fügens des Klebepartners.

Die offenen Zeiten der ersten Schicht und der zweiten Schicht der zweischichtigen Filme können auch identisch sein.

Der einschichtige Film kann auf Polyolefinen, bevorzugt Polyethylen oder Polypropylen, besonders bevorzugt Maleinsäureanhydrid-gepfropftem Polyethylen oder Polypropylen basieren. Ebenso sind aber auch andere Polyolefine, insbesondere die Copolymere wie z.B. EVA, EAA, EMA, EBA, GMA, PE-PP-Copolymere, TPO und Styrolblockcopolymere als Basis denkbar. Bei der Verwendung eines Einschichtfilm muss dieser derart ausgestaltet sein, dass eine ausreichenden Haftung zu EPDM und zu der zweiten Schicht des zweischichtigen Filmes ausgebildet wird.

Das Inkontaktbringen der ersten Folie mit dem ersten Profilende kann vorzugsweise mittels eines temperierbaren Stempels oder einer Heizplatte erfolgen. Der temperierbare Stempel oder die Heizplatte weisen jeweils eine antihaftende Beschichtung auf. Dadurch verkleben die mindestens zweischichtigen Filme nicht mit dem temperierbaren Stempel oder der Heizplatte.

Die Schicht der Filme, welche die erste offene Zeit aufweist, kann auf Polyethylen oder Polypropylen basieren. Auf diese Weise sind vergleichsweise kurze offene Zeiten für die erste Schicht gewährleistet. Für die im Automobilbau vorherrschenden Ethylen-Propylen-Dien-Kautschuk(EPDM)-Profile sind Polyethylen und Polypropylen bevorzugt. Möglich sind aber auch andere Polyolefine, insbesondere die Copolymere wie z.B. EVA, EAA, EMA, EBA, GMA, PE-PP-Copolymere, TPO und Styrolblockcopolymere oder auch Blends aus den vorgenannten Copolymeren oder aus vorgenannten Copolymeren mit PE und PP. Die Blends können auch mineralische Füllstoffe aufweisen.

Die Schicht der Filme, welche die zweite offene Zeit aufweist, kann auf Copolyester, Copolyamid oder thermoplastischen Polyurethanen basieren. Damit weist die Schicht mit der zweiten offenen Zeit eine vergleichsweise lange offene Zeit auf und kann entsprechend zu einem späteren Verfahrenszeitpunkt verklebt werden. Ebenso geeignet sind Styrolblockcopolymere und PVC. Olefinische Copolymere und deren Blends mit PE und PP wie EVA, EAA, EMA, EBA, GMA, PE-PP-Copolymere sind dann geeignet, wenn sie einen hohen Comonomeranteil aufweisen, so dass sie eine ausreichend lange offene Zeit aufweisen. Ebenso geeignet sind auch technische Kunststoffe wie beispielsweise ABS, SAN, ASA, PC, PET, PBT, POM, PMMA und Blends davon.

In dem Verfahren kann sich eine weitere Schicht zwischen den Schichten der mindestens zweischichtigen Filme befinden, insbesondere eine Haftvermittlerschicht. Die weitere Schicht kann ebenso Füllstoffe, insbesondere Bulkmaterial, aufweisen. Unter Bulkmaterial verstehen sich bevorzugt anorganische Materialien in einer Kunststoffmatrix. Ebenso kann die weitere Schicht aus preiswerten Kunststoffen gefertigt sein. Selbstverständlich können sich auch mehrere Schichten zwischen den beiden vorgenannten Schichten befinden. Auf diese Weise können weitere vorteilhafte Eigenschaften, wie beispielsweise eine optimierte Haftung zwischen den beiden erstgenannten Schichten, in den mindestens zweischichtigen Film eingebracht werden. Des Weiteren können durch eine oder mehrere zwischengelagerter Schichten Toleranzen beim Schneiden des Profils ausgeglichen werden.

Nach Einbringen beider beschichteten Profilenden können die beschichteten Profilenden mit einem Werkzeug, insbesondere einem Greifsystem oder Schieber, zueinander, insbesondere aufeinander, gepresst werden. Auf diese Weise werden die beschichteten Profilenden aktiv in Kontakt gebracht und ein Verkleben sichergestellt. Wird auf die Verwendung von Werkzeugen zum Zueinander- bzw. Aufeinanderpressen der beschichteten Profilenden verzichtet, so ist das Material des Profils und damit das Material der Profilenden derart gewählt, dass sich dieses durch Eigenelastizität im Spalt ausdehnt und die beschichteten Profilenden dadurch aufeinander gepresst werden. Ist die Eigenelastizität nicht ausreichend, so können die Profilenden mechanisch mittels des vorgenannten Werkzeugs in Kontakt gebracht werden.

Alternativ können die freien Profilenden vor dem Anordnen der zwei mindestens zweischichtigen Filme oder des zweischichtigen Films und des einschichtigen Films aktiviert werden. Dies insbesondere durch Erwärmen. So liegen die Profilenden erwärmt vor, während die mindestens zweischichtige Filme oder der zweischichtige Film und der einschichtigen Film zur Beschichtung der Profilenden nicht erwärmt wurden. Ebenso können die zwei mindestens zweischichtigen Filme oder der zweischichtige Film und der einschichtige Film vor dem Anordnen an die Profilenden aktiviert, insbesondere erwärmt, werden. Selbstverständlich können sowohl die freien Profilenden vor dem Anordnen der zwei mindestens zweischichtigen Filme oder des zweischichtigen Films und des einschichtigen Films als auch die mindestens zweischichtigen Filme oder der zweischichtige Film und der einschichtige Film vor dem Anordnen an die Profilenden aktiviert werden. Der Begriff "Anordnen" umfasst das im Klebstoffbereich üblicherweise verwendete "Aufbringen" einer Komponente.

Nach oder gleichzeitig mit den Verfahrensschritten Inkontaktbringen von einer ersten Folie mit dem ersten Profilende und/oder Inkontaktbringen eines weiteren Films mit dem zweiten Profilende kann eine Kontur gestanzt werden. So weist die Nahtstelle aus Profilenden und Filmen keine Überstände auf. Damit passt sich das eingebrachte Profil den Gegebenheiten einer Zielstelle optimal an.

Des Weiteren kann die Schicht, welche die zweite offene Zeit aufweist, des mindestens zweischichtigen zweiten Films aktiviert werden vorzugsweise mittels eines Infrarot-Strahlers. Auf diese Weise sind nur kurze Aktivierungszeiten notwendig und eine kurze Taktzeit sichergestellt. Weitere mögliche Wärmequellen können sein: Flamme, Heizplatte, Heizbalken, Heissluft. Ebenso können die Filme derart ausgestaltet sein, dass eine Aktivierung mittels Induktion, Hochfrequenzstrahlung oder Ultraschall möglich ist.

Die Schicht mit der zweiten offenen Zeit der mindestens zweischichtigen Filme kann aus einem Ultraschall-, Reibschweiss- oder Hochfrequenz-aktivierbaren Material hergestellt sein. Dies sind insbesondere technische Polymere wie Polyvinylchlorid (PVC), Polymethylmethacrylat (PMMA), Polybutylenterephthalat (PBT), Polyamid (PA), Polycarbonat (PC), Polycarbonat/Acrylnitril-Butadien-Styrol (PC/ABS), aber auch PS, ABS, SAN, ASA, SB, POM, PET, TPU und Blends davon.

Des Weiteren betrifft die Erfindung ein Profil, welches nach einem der vorgenannten Verfahren hergestellt ist.

Des Weiteren betrifft die Erfindung die Verwendung eines Profils, welches nach einem der vorgenannten Verfahren hergestellt ist, im Automobilbereich, im Haushaltswarenbereich oder im Fensterbau zur Erzeugung einer elastischen Abdichtung. Der Automobilbereich umfasst selbstredend Personenkraftfahrzeuge, Lastkraftwagen, Traktoren oder andere Nutzfahrzeuge. Ebenso betrifft die Erfindung die Verwendung der vorgenannten Profile in Zügen und dergleichen. Haushaltswaren umfassen insbesondere Waschmaschinen, Trockner, Geschirrspüler, Kühlschränke, Gefrierschränke, Mikrowellengeräte, Steamer, und Wärmeschubladen. Ebenso betrifft die Erfindung die Verwendung der vorgenannten Profile in Antiknarzprofilen, im Apparatebau, im Sanitärbereich, in der Umwelttechnik, in Wintergärten, in der Klimatechnik, im Containerbau, in Wohnwagen, in Fassaden und in Laminatklemmen (Photovoltaik).

Die Erfindung wird im Folgenden anhand von Abbildungen exemplarischer Ausführungsbeispiele näher erläutert.

Es zeigen:
- Fig. 1:: Profilenden mit zweischichtigen Filmen mit offenem Spalt;
- Fig. 2:: Profilenden mit zweischichtigen Filmen;
- Fig. 3:: Profilenden mit einem zweischichtigen Film und einem einschichtigen Film;
- Fig. 4:: Profilenden mit zweischichtigen Filmen und Sonotroden.

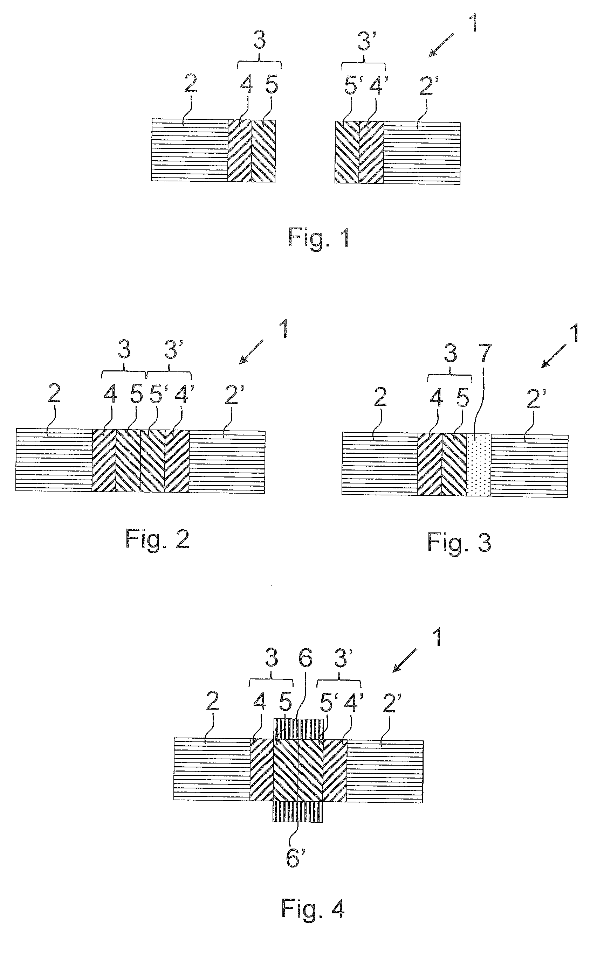

Figur 1 zeigt ein erfindungsgemässes Profil 1 umfassend zwei Profilenden 2, 2' und zwei zweischichtige Filme 3, 3'. Die zweischichtigen Filme 3, 3' weisen eine erste Schicht 4, 4' und eine zweite Schicht 5, 5' auf. Die ersten Schichten 4, 4' sind den Profilenden 2, 2' angeordnet und weisen eine kurze offene Zeit auf. Die zweiten Schichten 5, 5' sind von den Profilenden 2, 2' entfernt positioniert und an den ersten Schichten 4, 4' angeordnet. Zwischen den mit dem zweischichtigen Filmen 3, 3' beschichteten Profilenden 2, 2' befindet sich ein Spalt, welcher durch ein Inkontaktbringen der zweiten Schichten 5, 5' miteinander geschlossen wird (vgl. Figur 2).

Figur 2 zeigt ein Profil wie bereits für Figur 1 beschrieben, wobei die zweiten Schichten 5, 5' bereits in Kontakt gebracht sind. Hier sind die zweiten Schichten 5, 5' in der finalen Position zur Verklebung der Profilenden.

Figur 3 zeigt ein erfindungsgemässes Profil 1 umfassend zwei Profilenden 2, 2' und einen zweischichtigen Film 3 und einen einschichtigen Film 7. Der zweischichtige Film 3 weist eine erste Schicht 4 und eine zweite Schicht 5 auf. Die erste Schicht 4 ist dem Profilende 2 angeordnet und weist eine kurze offene Zeit auf. Die zweite Schicht 5 ist von dem Profilende 2 entfernt positioniert und der ersten Schichte 4 angeordnet. Die einschichtige Folie 7 ist dem Profilende 2' angeordnet und steht in Kontakt mit der zweiten Schicht 5 der zweischichtigen Folie 3. Das Profil 1 ist durch ein Inkontaktbringen der zweiten Schicht 5 mit der Folie 7 geschlossen.

Figur 4 zeigt ein Profil 1 wie vorgängig für die Figuren 1 und 2 bereits beschrieben. An den zweiten Schichten 5, 5' sind zwei Sonotroden 6, 6' angeordnet, die die beiden zweiten Schichten 5, 5' aktivieren. Aufgrund der Aktivierung der zweiten Schichten 5, 5' werden die zweiten Schichten 5, 5' miteinander verklebt und ein geschlossenes Profil gebildet.

### AUSFÜHRUNGSBEISPIELE

Für die Stossverklebung können beispielsweise die Zweischichtfilme nolax 45.200 (basierend auf modifiziertem Polyethylen/Copolyamid-Zweischichtfilm) oder nolax S22.2202 (basierend auf modifizierten Polyolefinen/TPU-Zweischichtfilm) verwendet werden. Zum Aufkaschieren des Films wird die Schnittfläche des Profils zusammen mit dem Film (Polyolefin/Polyethylen-Seite gegen das Profil) auf eine geheizte und mit einer Teflonauflage versehenen Heizbalken gepresst. Die Schnittfläche des Profils kann dabei glatt geschliffen sein. Die Temperatur des Heizbalkens liegt bei ca. 200°C und damit unterhalb der beginnenden Zersetzung des CoPA beziehungsweise TPU von ca. 230°C und möglichst oberhalb der Schmelztemperatur des Polyethylen von 120°C. Damit werden besonders kurze Taktzeiten erreicht. Nach ca. 10 Sekunden wird das Profil zurückgezogen und der Überstand entfernt, bevorzugt erfolgt dies durch einen Konturschnitt oder alternativ durch Wegreissen.

Als Einschichtfolie eignet sich z.B. nolax 22.100 (basierend auf modifizierten Polyolefinen). welche mit denselben Parametern wie vorgängig erläutert aufkaschiert wird.

Alternativ kann das Aufkaschieren auch erfolgen, indem der Film mit einem IR-Strahler zwischen Profilende und Film erhitzt wird. Auch hier wird eine Oberflächentemperatur von ca. 200°C erreicht. Das Anpressen kann im Folgenden gegen einen nicht beheizten Balken erfolgen.

Wird der Film wie vorgängig beschrieben aufkaschiert, so ist gleichzeitig auch die CoPA beziehungsweise die TPU-Schicht des nolax 45.200 beziehungsweise nolax S22.2202 aktiviert und das Profilende wird erfindungsgemäss eingebaut.

Das vorbeschichtete Ende des Profils kann auch mittels Heissluft aktiviert werden. Dazu wird die Oberflächentemperatur des Copolyamides für ca. 10 Sekunden auf eine Temperatur von >130°C erwärmt. Bei der Verwendung von TPU ist eine Temperatur von 160°C ebenfalls für ca. 10 Sekunden erforderlich.

Der Einbau und das Inkontaktbringen mit dem zweiten Profilende geschehen innerhalb von 5-30 Sekunden.

Wird die Aktivierung über Hochfrequenz-, Ultraschall- oder Reibschweissen erreicht, so können die Filme wie vorgängig erläutert verwendet werden. Die Schritte bis zu den beiden vorbeschichteten Profilenden sind dabei identisch. Das Profil wird mit kalten, nicht mehr aktiven Enden eingebaut und die Sonotrode aufgesetzt. Die Aktivierung geschieht bei Frequenzen von 20 bis 40 kHz und Taktzeiten von 1 bis 2 Sekunden.

## Patentansprüche

1. Verfahren zum Stossverkleben von Profilenden (2, 2') umfassend die Schritte:
a. Bereitstellen einer Vorrichtung zum Stossverkleben von Profilenden (2, 2'),
b. Bereitstellen eines Profils (1), insbesondere eines Endlosprofils,
c. Bereitstellen von zwei mindestens zweischichtigen Filmen (3, 3') oder von einem einschichtigen Film (7) und einem mindestens zweischichtigen Film (3), wobei die mindestens zweischichtigen Filme (3, 3') eine erste Schicht (4, 4') mit einer erste offenen Zeit bevorzugt im Bereich von 0,01 bis 20 sek, besonders bevorzugt im Bereich von 0,1 bis 10 sek, und eine zweite Schicht (5, 5') mit einer zweiten offene Zeit aufweisen, welche insbesondere grösser der ersten offenen Zeit der ersten Schicht (4, 4') ist,
d. Inkontaktbringen von einer ersten Folie (3) mit dem ersten Profilende (2) unter derartigen Bedingungen, dass sich die erste Schicht (4) der ersten Folie (3) mit dem ersten Profilende (2) verbindet,
e. Ablängen des Profils (1) falls in b. ein Endlosprofil bereitgestellt wurde,
f. Einbau des Profils (1) derart, dass das zweite folienfreie Profilende (2') zugänglich ist,
g. Inkontaktbringen eines weiteren Films, der
- mindestens zweischichtig (3'), insbesondere identisch dem ersten Film (3), oder
- einschichtig (7) ausgestaltet ist,
mit dem zweiten Profilende (2') unter derartigen Bedingungen, dass sich die Schicht (4') des weiteren zweischichtigen Films (3') oder die einzige Schicht des einschichtigen Films (7) mit dem zweiten Profilende (2') verbindet,
h. Inkontaktbringen der zwei Filme (3, 3') oder der zwei Filme (3, 7) unter derartigen Bedingungen,
- dass sich die zweiten Schichten (5, 5') der zwei Filme (3, 3') verbinden oder,
- dass sich die zweite Schicht (5) des zweischichtigen Films mit der einzigen Schicht des einschichtigen Films (7) verbindet.

2. Verfahren gemäss Anspruch 1, wobei die Schicht (4, 4') der Filme, welche die erste offene Zeit aufweist, auf Polyethylen oder Polypropylen basiert.

3. Verfahren gemäss einem der Ansprüche 1 oder 2, wobei die Schicht (5, 5'), welche die zweite offene Zeit aufweist, auf Copolyester, Copolyamid oder thermoplastischen Polyurethanen basiert.

4. Verfahren gemäss einem der Ansprüche 1 bis 3, wobei sich zwischen den Schichten (4, 4, 5, 5') der mindestens zweischichtigen Filme (3, 3') mindestens eine weitere Schicht befindet, insbesondere eine Haftvermittlerschicht.

5. Verfahren gemäss einem der Ansprüche 1 bis 4, wobei nach Schritt g. die beschichteten Profilenden (2, 2') mit einem Werkzeug, insbesondere einem Greifsystem oder Schieber, zueinander gepresst werden.

6. Verfahren gemäss einem der Ansprüche 1 bis 5, wobei die freien Profilenden (2, 2') vor dem Anordnen
- der zwei mindestens zweischichtigen Filme (3, 3') oder
- des mindestens zweischichtigen Films (3) und des einschichtigen Films (7)
aktiviert, insbesondere erwärmt, werden.

7. Verfahren gemäss einem der Ansprüche 1 bis 5, wobei
- die zwei mindestens zweischichtigen Filme (3, 3') oder
- der mindestens zweischichtige Film (3) und der einschichtige Film (7)
vor dem Anordnen an die Profilenden (2, 2') aktiviert, insbesondere erwärmt, werden.

8. Verfahren gemäss einem der Ansprüche 1 bis 7, wobei nach Schritt d. und/oder Schritt g. oder gleichzeitig mit Schritt d. und/oder Schritt g. eine Kontur gestanzt wird.

9. Verfahren gemäss einem der Ansprüche 7 oder 8, wobei die Schicht (5, 5'), welche die zweite offene Zeit aufweist, des mindestens zweischichtigen zweiten Films (3, 3') aktiviert wird, insbesondere mittels IR-Strahler.

10. Verfahren gemäss einem der Ansprüche 1 bis 9, wobei die Schicht (5, 5') mit der zweiten offenen Zeit der mindestens zweischichtigen Filme (3, 3') aus einem Ultraschall-, Reibschweiss- oder Hochfrequenz-aktivierbaren Material hergestellt ist.

11. Profil (1) hergestellt nach einem Verfahren gemäss einem der Ansprüche 1 bis 10.

12. Verwendung eines Profils (1) hergestellt nach einem Verfahren gemäss einem der Ansprüche 1 bis 10 im Automobilbereich, Haushaltswarenbereich oder Fensterbau zur Erzeugung einer elastischen Abdichtung.
